Europäisches Patentamt

(19) European Patent Office

Office européen des brevets

(11) EP 0 522 946 B1

(12) **FASCICULE DE BREVET EUROPEEN**

(45) Date de publication et mention
de la délivrance du brevet:
**14.08.1996 Bulletin 1996/33**

(51) Int. Cl.$^6$: **C02F 3/30**, C02F 1/70,
C02F 3/10

(21) Numéro de dépôt: **92401933.4**

(22) Date de dépôt: **06.07.1992**

(54) **Procédé de dénitrification de l'eau utilisant du fer métallique et installation pour sa mise en oeuvre**

Verfahren und Anlage für die Denitrifikation von Wasser mit metallischem Eisen

Process and installation for water denitrification using metallic iron

(84) Etats contractants désignés:
**AT BE CH DE DK ES GB GR IT LI LU NL PT SE**

(30) Priorité: **08.07.1991 FR 9108526**

(43) Date de publication de la demande:
**13.01.1993 Bulletin 1993/02**

(73) Titulaire: **SOCIETE ANONYME DE GESTION DES EAUX DE PARIS S.A.G.E.P.**
**F-75014 Paris (FR)**

(72) Inventeurs:
• **Montiel, Antoine**
**F-94600 Choisy le Roi (FR)**
• **Welté, Bénédicte**
**F-75014 Paris (FR)**

(74) Mandataire: **Lepeudry-Gautherat, Thérèse et al**
**CABINET LEPEUDRY,**
**52, avenue Daumesnil**
**75012 Paris (FR)**

(56) Documents cités:
EP-A- 0 206 690          WO-A-85/05099

• **PATENT ABSTRACTS OF JAPAN vol. 14, no. 330 (C-741)(4273) 16 Juillet 1990**
• **CHEMICAL ABSTRACTS, vol. 101, no. 11, 10 Septembre 1984, Columbus, Ohio, US; abstract no. 87216a, GOUY, JEAN LUC ET AL. page 342, colonne L**
• **WATER SCIENCE AND TECHNOLOGY vol. 20, no. 3, Mars 1988, pages 149 - 163 CAROL BRAESTER ET AL. 'THE VYREDOX AND NITREDOX METHODS OF IN SITU TREATMENT OF GROUNDWATER'**
• **Traduction anglaise de JP-A-2 119 992.**

Remarques:
Le dossier contient des informations techniques présentées postérieurement au dépôt de la demande et ne figurant pas dans le présent fascicule.

EP 0 522 946 B1

**Description**

La présente invention a pour objet un procédé original permettant une dénitrification des eaux destinées à la consommation humaine.

En effet, on constate une augmentation de la teneur en nitrates des eaux souterraines et même des eaux superficielles. Dans les zones à agriculture intensive, cette augmentation peut aller de 1 à 2, voire plus de 2 mg/l et par an.

une forte teneur en nitrates (supérieure à 50 mg/l) interdit l'usage de cette eau pour certaines utilisations : consommation humaine, industrie alimentaire.

Deux approches sont possibles pour diminuer la teneur en nitrates des eaux souterraines ou des eaux superficielles :

- soit une action préventive par modification des pratiques culturales ; cette approche est très prometteuse mais les résultats sont longs à venir ;
- soit des actions curatives ; ce sont les traitements classiques de dénitrification.

Ces traitements de dénitrification sont soit purement physicochimiques (échange d'ions, par exemple), soit biologiques.

Les traitements biologiques peuvent faire appel à des bactéries dénitrifiantes, soit hétérotrophes, soit autotrophes.

Les bactéries hétérotrophes utilisées sont des bactéries naturelles du cycle de l'azote telles que Bacillus prodigiusus ou surtout Bacillus denitrificans et Pseudomonas.

Le principe général des traitements par les bactéries hétérotrophes est :

$$\text{nitrate + source de carbone +} \xrightarrow{\text{bactéries dénitrifiantes}} \text{azote + gaz carbonique.}$$

La source de carbone peut être de l'éthanol, du méthanol, de l'acide acétique, de la paille, du méthane ou de l'acide lactique (en France, seuls l'éthanol et l'acide acétique sont agréés pour la préparation d'eaux destinées à la consommation humaine).

L'inconvénient essentiel d'une telle méthode réside dans le fait que l'ajout d'un réactif liquide nécessite une surveillance très importante.

Les bactéries autotrophes utilisées dépendent de la source de minéral utilisé. Ainsi, pour le procédé dit soufre ou sulfure, ce sont des bactéries des cycles du soufre telles qu'entre autres des sulfuraires pourpres, des sulfuraires vertes ou des sulfuraires incolores.

Ces procédés purement biologiques ne donnent pas entièrement satisfaction à ce jour et ils sont peu utilisés car très onéreux.

Selon l'invention, on a eu l'idée, pour dénitrifier tant les eaux de surface que les eaux des nappes souterraines, de faire appel à la combinaison de phénomènes biologiques et chimiques faisant intervenir à la fois le cycle de l'azote et le cycle du fer.

Un procédé de ce type pour la dénitrification des nappes souterraines est déjà connu et exploité sous la dénomination NITREDOX®. Ce procédé est décrit et commenté par C. Braester et R. Martinell dans Wat. Sci. Tech. 1988, vol 20(3), p 149-163 et 165-172. Il est relativement complexe dans la mesure où il nécessite l'utilisation de deux séries concentriques de puits périphériques autour du puits central, la série de puits le plus éloignée du puits central servant à la réduction des nitrates en nitrites avec utilisation intermittente d'une substance appropriée consommant de l'oxygène telle que le méthanol et l'autre série de puits servant à l'élimination'de l'azote gazeux et à l'oxydation du fer et du manganèse présents dans le sol, et à l'oxydation des nitrites éventuels. Comme expliqué dans le deuxième article cité plus haut (p 165-172), ce procédé ne peut fonctionner de façon satisfaisante que si différents paramètres sont surveillés simultanément.

La présente invention a donc pour but de mettre au point un procédé nouveau et original de dénitrification des eaux tant de surface que des nappes souterraines ne présentant pas les inconvénients des procédés actuellement connus.

Selon l'invention, ce but est atteint grâce à un procédé de dénitrification de l'eau, caractérisé en ce qu'il consiste essentiellement à mettre l'eau en contact avec un lit de fer métallique et à la faire passer ensuite sur un lit filtrant apte à l'installation d'un biofilm de ferrobactéries et de bactéries dénitrifiantes, sans contact avec l'air, et en ce que la dénitrification purement physicochimique de l'eau par le fer métallique est complétée par un traitement biologique qui comprend le passage de l'eau sur ledit lit filtrant et fait intervenir un biofilm préalablement constitué in situ à partir des ferrobacteries présentes dans l'eau à traiter.

La dénitrification de l'eau obtenue par ce procédé peut s'expliquer comme suit.

Le fer métallique en contact avec l'eau se dissout pour donner du fer ferreux $Fe^{2+}$ en solution. Ce fer consomme une partie de l'oxygène de l'eau et est oxydé en hydroxyde ferrique $[Fe(OH)_3]$, provoquant un abaissement du potentiel d'oxydo-réduction de l'eau qui transforme une partie des nitrates en nitrites.

2

En l'absence d'apport d'oxygène (pas de contact avec l'air), le fer ferreux n'est pas oxydé immédiatement en fer ferrique qui précipite sous forme de Fe(OH)$_3$ ; on observe donc une réduction des nitrates. On observe ensuite une succession de processus biologiques ou chimiques.

Le fer ferreux dissous peut être oxydé par voie biologique par les ferrobactéries présentes naturellement dans l'eau et les ferrobactéries éventuellement ajoutées. En présence de quantités très faibles d'oxygène de l'eau, l'oxygène des nitrates est consommé dans cette réaction, conduisant directement à de l'azote qui s'élimine.

Le fer ferreux réagit aussi par voie chimique avec les nitrites et les nitrates de l'eau et donne naissance à du fer ferrique qui précipite sous forme de Fe(OH)$_3$ et à de l'azote.

Les bactéries dénitrifiantes présentes naturellement dans l'eau et les bactéries dénitrifiantes éventuellement ajoutées utilisent comme substrat carboné les matières organiques produites par les ferrobactéries ; elles conduisent à la réduction des nitrates en azote.

En résumé, tous ces phénomènes conduisent à une dénitrification de l'eau par transformation des nitrates en azote en utilisant du fer métallique.

Le lit de fer métallique utilisé selon l'invention peut être constitué de fer métallique sous une forme quelconque. Avantageusement, il est constitué de tournure de fer, de copeaux de fer ou de fils de fer.

Comme lit filtrant apte à l'installation d'un biofilm on peut citer notamment un lit de charbon actif, de pierre ponce, d'une zéolithe ou d'une argile cuite sous forme granulaire (brique pilée, Biolite® ou Biodamine®, par exemple). Toutefois, toute matière apte à retenir les ferrobactéries et les bactéries dénitrifiantes sans interférer avec les réactions biologiques et chimiques intervenant dans le procédé peut être utilisée. Ainsi, dans le cas de la dénitrification des eaux souterraines, le sol peut avantageusement servir de support biologique.

En tout état de cause, le lit filtrant doit présenter des caractéristiques d'aptitude à la fixation d'un biofilm de ferrobactéries et de bactéries dénitrifiantes et des caractéristiques dimensionnelles telles qu'on obtienne le degré de dénitrification souhaité dans les conditions d'utilisation envisagées.

Les ferrobactéries présentes à l'état naturel dans les eaux à traiter et qui s'installent sous forme de biofilm sur le lit filtrant sont notamment : Leptothrix, Crenothrix, Toxothrix, Clonothrix, Sphaerotilus, Gallionella, Sideromonas, Siderocapsa, Siderobacter, Siderocystis, Siderococcus, Ferrobacillus metallogenium, Pseudomonas et/ou Thiobacillus ferroxidans.

Au démarrage de l'installation de dénitrification, pour limiter le temps d'ensemencement naturel du support poreux ou lit filtrant qui est normalement de 15 à 21 jours, on peut avantageusement lui ajouter des ferrobactéries choisies dans la liste ci-dessus, notamment du type Gallionella car ces bactéries, en absence d'oxygène, utilisent les nitrates qui sont réduits en nitrites et azote.

Les bactéries dénitrifiantes présentes à l'état naturel dans les eaux à traiter et qui s'installent sous forme de biofilm sur le lit filtrant sont notamment des Bacillus denitrificans.

Pour activer la mise en condition du système, on peut avantageusement ajouter au support poreux, au démarrage de l'installation, des bactéries dénitrifiantes telles que notamment Bacillus denitrificans.

Pour accélérer la transformation des nitrates en azote, on ajoute avantageusement à l'eau à traiter un réducteur qui élimine l'oxygène de l'eau. Ce réducteur est de préférence choisi parmi les sulfites ou thiosulfates physiologiquement compatibles. La quantité de réducteur à ajouter est avantageusement la quantité stoechiométrique, calculée à partir de la teneur en oxygène de l'eau à traiter.

Afin de favoriser la corrosion du fer, il est souhaitable de réaliser une pile électrochimique en utilisant un élément ayant un potentiel d'électrode (échelle de Nernst) plus élevé que celui du fer. Les éléments répondant à cette exigence sont le cuivre, le nickel, le plomb, l'argent, le platine et l'or. Parmi ces éléments, le plomb ne peut être retenu dans le cadre du procédé selon l'invention en raison de sa toxicité, l'argent parce qu'il est bactéricide, le platine et l'or en raison de leur coût trop élevé. Quant au nickel, il serait peu efficace car son potentiel est très proche de celui du fer. Selon l'invention, on utilise donc de préférence le cuivre, notamment sous forme de copeaux.

Selon ce mode de mise en oeuvre préféré, on fait passer l'eau à traiter, éventuellement additionnée d'un réducteur, sur du cuivre, notamment sous forme de copeaux, avant sa mise en contact avec le fer.

Pour favoriser la corrosion du fer, on peut également utiliser un courant de corrosion produit par une pile de corrosion constituée d'un générateur de courant continu favorisant la dissolution du fer (anode soluble).

Les essais réalisés ont montré que plus le temps de contact de l'eau avec le fer est élevé, plus la libération de fer est importante. Les temps de contact sont avantageusement de 2 à 8 heures. Des temps de contact inférieurs à 2 heures donnent généralement des résultats non satisfaisants, alors que des temps de contact supérieurs à 8 heures n'apportent pas d'amélioration significative.

La durée de contact dans le lit filtrant est avantageusement de 30 minutes à 2 heures, notamment de 1 heure.

La source de carbone pour les ferrobactéries est en général le carbone minéral de l'eau traitée. Eventuellement, on peut ajouter une autre source de carbone physiologiquement compatible telle que du carbonate de calcium qui peut être mélangé avec le fer, par exemple.

Le procédé selon l'invention peut être mis en oeuvre soit en usine de traitement, soit directement dans le sol (dénitrification in situ).

Le traitement en usine de traitement comprend essentiellement les étapes successives consistant à :

a) ajouter ou non un réducteur à l'eau,

b) faire passer ou non l'eau sur du cuivre divisé ou utiliser ou non un courant de corrosion,

c) faire passer l'eau sur un lit de fer métallique, additionné ou non d'une source de carbone, le temps de contact étant de 2 à 8 heures,

d) sans contact avec l'air, faire passer l'eau sur un lit filtrant apte à l'installation d'un biofilm, préalablement constitué in situ à partir de ferrobactéries et de bactéries dénitrifiantes présentes dans l'eau à traiter, le temps de contact étant de 30 minutes à 2 heures.

Quel que soit son mode de dénitrification, l'eau obtenue est ensuite affinée si sa turbidité est supérieure à 0,5 NTU. Pour cet affinage, on peut effectuer une filtration sur 1 m de sable, à la vitesse de 5 à 10 m/h.

Dans tous les cas, on effectue une étape de désinfection en utilisant un moyen classique, par exemple le chlore, le bioxyde de chlore ou l'ozone.

**Exemples de mise en oeuvre**

Des essais "pilotes" ont été réalisés en usine de traitement avec une installation de traitement du type décrit ci-dessus.

**Exemple 1**

L'eau à traiter contenant environ 51 mg/l de nitrates, est introduite à une vitesse de 1 m/h au sommet d'une cuve de 1,5 mètre de hauteur contenant 1 mètre de fer métallique sous forme de copeaux, surmonté d'une couche de copeaux de cuivre. L'eau ayant traversé la couche de copeaux de cuivre et de fer métallique est envoyée au sommet d'une cuve contenant 1 mètre d'un lit filtrant constitué de Biolite®. L'eau dénitrifiée est recueillie à la base de cette cuve.

La durée de contact eau-fer est de 8 heures.

La durée de contact eau-lit filtrant est de 2 heures.

Les résultats obtenus sont résumés dans le tableau qui suit.

|  | Entrée : nitrates (mg/l) | Sortie : nitrates (mg/l) |
|---|---|---|
| J + 6 | 51,5 | 43,5 |
| J + 12 | 51 | 39 |
| J + 15 | 51 | 30,5 |
| J + 18 | 51 | 34 |
| J + 24 | 51 | 30 |

On constate qu'à ce débit de 1 m/h, la stabilisation se fait au niveau de 30 mg/l.

**Exemple 2**

En utilisant la même installation à un débit de 0,2 m/h, les valeurs obtenues pour des essais de courte durée (1 jour) ont été de 15 à 20 mg/l de nitrates en sortie, pour une eau introduite à 50 mg/l de nitrates.

**Revendications**

1. Procédé de dénitrification de l'eau utilisant du fer métallique, sans contact avec l'air, caractérisé en ce que l'eau à traiter traverse successivement un premier lit constitué d'une matière essentiellement métallique comprenant principalement du fer, puis un deuxième lit qui est un lit filtrant apte à l'installation d'un biofilm de bactéries, et en ce que la dénitrification purement physicochimique de l'eau par le fer métallique est complétée par un traitement biologique qui comprend le passage de l'eau sur ledit lit filtrant et fait intervenir un biofilm préalablement constitué in situ à partir des ferrobactéries et des bactéries dénitrifiantes présentes dans l'eau à traiter.

2. Procédé selon la revendication 1, caractérisé en ce que dans le lit de matière essentiellement métallique, le fer est constitué de tournure de fer, de copeaux de fer ou de fils de fer.

3. Procédé selon la revendication 1 ou 2, caractérisé en ce que le lit filtrant est constitué de charbon actif, de pierre ponce, d'une zéolithe ou d'une argile cuite sous forme granulaire.

4. Procédé selon l'une quelconque des revendications 1 à 3, caractérisé en ce qu'on ajoute un réducteur à l'eau à traiter, de préférence un sulfite ou un thiosulfate physiologiquement compatible.

5. Procédé selon l'une quelconque des revendications 1 à 4, caractérisé en ce que, pour favoriser la corrosion du fer, on réalise une pile électrochimique au moyen d'un élément ayant un potentiel plus élevé que celui du fer, de préférence au moyen de cuivre.

6. Procédé selon l'une quelconque des revendications 1 à 5, caractérisé en ce que, pour favoriser la corrosion du fer, on utilise un courant de corrosion produit par une pile de corrosion constituée d'un générateur de courant continu favorisant la dissolution du fer.

7. Procédé selon l'une quelconque des revendications 1 à 6, caractérisé en ce qu'on ajoute une source de carbone minéral physiologiquement compatible, de préférence du carbonate de calcium qui est avantageusement mélangé avec le fer.

**Claims**

1. A water denitrifying process using metallic iron, without contact with air, characterized in that the water to be treated successively passes through a first bed, that is composed of an essentially metallic material mainly comprising iron, then through a second bed, which is a filter bed suitable for the establishment of a biofilm of bacteria, and in that the purely physico-chemical denitrification of the water by the metallic iron is completed by a biological treatment, which comprises passing the water through said filter bed and makes use of a biofilm, previously established in situ from ferrobacteria and denitrifying bacteria present in the water to be treated.

2. A process according to claim 1, characterized in that in the bed of essentially metallic material, iron consists in iron turnings, iron chips or iron wires.

3. A process according to claim 1 or 2, characterized in that the filter bed consists in active carbon, pumice stone, a zeolite or a fire-clay in granular form.

4. A process according to anyone of claims 1 to 3, characterized in that a reducing agent is added to the water to be treated, preferably a physiologically compatible sulfite or thiosulfate.

5. A process according to anyone of claims 1 to 4, characterized in that, in order to promote the corrosion of the iron, an electrochemical cell is produced by means of an element having a potential higher than that of iron, preferably by means of copper.

6. A process according to anyone of claims 1 to 5, characterized in that, in order to promote the corrosion of the iron, use is made of a corrosion current produced by a corrosion cell formed by a direct current generator promoting the dissolution of iron.

7. A process according to anyone of claims 1 to 6, characterized in that there is added a physiologically compatible source of carbon, preferably calcium carbonate, which is advantageously mixed with the iron.

**Patentansprüche**

1. Verfahren zur Denitrifikation von Wasser unter Verwendung von metallischem Eisen ohne Luftkontakt, dadurch gekennzeichnet, daß das zu behandelnde Wasser nacheinander durch ein erstes Bett hindurchtritt, welches im wesentlichen aus metallischem, hauptsächlich Eisen enthaltendem Material besteht und sodann durch ein zweites Bett, welches ein zur Ausbildung eines Biofilms aus Bakterien geeignetes Filterbett ist, und dadurch, daß die lediglich physikalisch-chemische, durch das metallische Eisen bewirkte Denitrifikation des Wassers mittels einer biologischen Behandlung vervollständigt wird, wobei das Wasser über dieses Filterbett geleitet wird und ein zuvor in situ aus in dem zu behandelnden Wasser vorkommenden Eisenbakterien und Denitrifikanten gebildetes Biofilm in Benutzung nimmt.

2. Verfahren nach Anspruch 1, dadurch gekennzeichnet, daß das Eisen in dem im wesentlichen aus metallischem Material bestehenden Bett aus Eisenspänen, Eisensplittern oder Eisendraht gebildet wird.

3. Verfahren nach Anspruch 1 oder 2, dadurch gekennzeichnet, daß das Filterbett aus Aktivkohle, Bimsstein, einem Zeolithen oder gebranntem Ton in Form eines Granulats gebildet wird.

4. Verfahren nach einem der Ansprüche 1 bis 3, dadurch gekennzeichnet, daß dem zu behandelnden Wasser ein Reduktionsmittel zugesetzt wird, vorzugsweise ein physiologisch verträgliches Sulfit oder Thiosulfat.

5. Verfahren nach einem der Ansprüche 1 bis 4, dadurch gekennzeichnet, daß zur Unterstützung der Korrosion des Eisens eine elektrochemische Zelle mittels eines Elements mit einem höheren Potential als Eisen, vorzugsweise mit Kupfer, hergestellt wird.

6. Verfahren nach einem der Ansprüche 1 bis 5, dadurch gekennzeichnet, daß zur Unterstützung der Korrosion des Eisens ein mittels einer Korrosionzelle erzeugter Korrosionsstrom verwendet wird, der von einem Gleichstromgenerator stammt und die Auflösung des Eisens begünstigt.

7. Verfahren nach einem der Ansprüche 1 bis 6, dadurch gekennzeichnet, daß eine physiologisch verträgliche mineralische Kohlenstoffquelle hinzugefügt wird, vorzugsweise aus Calciumcarbonat, welches vorzugsweise mit Eisen vermischt wird.